# EUROPEAN PATENT SPECIFICATION

(11) **EP 1 062 599 B1**
(45) Date of publication and mention of the grant of the patent: **11.07.2007**
(21) Application number: 99913787.0
(22) Date of filing: 09.03.1999
(51) Int. Cl.: G06F 17/30

(54) **IMPROVEMENTS IN, OR RELATING TO, TELECOMMUNICATIONS TRANSMISSION SYSTEMS**
VERBESSERUNGEN IN ODER IN BEZUG AUF TELEKOMMUNIKATIONS-ÜBERTRAGUNGS-SYSTEME
AMELIORATIONS APPORTEES AUX SYSTEMES DE TRANSMISSION DES TELECOMMUNICATIONS OU SE RAPPORTANT A CES SYSTEMES

(30) Priority: 10.03.1998 SE 9800801
(43) Date of publication of application: 27.12.2000
(73) Proprietor: Telia AB (publ), 123 86 Farsta (SE)
(72) Inventor: JANSSON, Sverker, S-194 61 Upplands Väsby (SE); ERIKSSON, Joakim, S-191 61 Sollentuna (SE); FINNE, Niclas, S-191 61 Sollentuna (SE)
(74) Representative: Hopfgarten, Nils
(86) International application number: PCT/SE1999/000353
(87) International publication number: WO 1999/046699

(56) References cited:
- WO-A1-96/23265
- DE-A1- 19 725 264
- US-A- 5 742 762

## Description

The present invention relates to a telecommunications transmission system adapted to operate as a platform for an electronic market place according to the preamble of claim 1, a service provider server for use with an electronic market place, a method for managing interactions between an agent-based electronic market and web-based or agent-based market according to the preamble of claim 24, and an electronic/optical signal modulated with an agent adapted for use with an agent based electronic market.

The present invention is directed to, among other things, methods of operating the physical infrastructure associated with a telecommunications transmission platform used to support the provision of telecommunications based services. It is necessary to draw a clear distinction between the operation of an electronic market place, which may be modelled on real world market places, and the telecommunications infrastructure used to provide a platform on which the electronic market place operates. It must be recognised that the methods of commerce used on, for example the Internet, and methods of operating the technical elements of the Internet are distinct.

Internet use has dramatically increased. Many people now have access to the Internet, not only from their offices but also from their homes. Through the development and deployment of secure identification systems, electronic payment systems etc., electronic commerce, usually referred to as e-commerce, on the Internet is becoming an acceptable way of conducting business safely and securely.

It is considered by many market research organizations that electronic commerce is one of the fastest growing areas on the Internet because it not only gives an Internet user a more convenient and time-saving shopping experience, but it also enables merchants, trading on the Internet, to save money through the use of more cost-efficient operations including, inter alia, business process re-engineering at the enterprise level increasing competitiveness through lower prices and the ability to introduce one-to-one marketing techniques.

Many companies have realized the impact and potential that agent orientated services will have on e-commerce on the Internet, both today and in the future. For example, Netscape has announced that agent-based search engines will be introduced in coming releases, and Jango already uses a search engine for commercial information based on agent orientation. In addition, Firefly and NetPerception have introduced Recommendation Engines which are being used by Amazon.com and other commercially successful web sites. There are also companies, such as Kinetoscope, that offer tools for developing agent-oriented services for the Internet.

When opening an electronic market, for the first time, where the participants are using a new infrastructure, there will be a lack of interesting services and useful information. This is frequently true for markets in the real world, as well as electronic, or Internet based markets. If there is little information and few services, the market will not be of interest to the "typical" customer. This results in a lack of customers which, in turn, means there will be too few new stores, etc.. This is a problem that many marketplaces operated on the Web have already experienced, for example, Passagen and Torget, two Swedish markets. It can be expected that the agent-based market infrastructure that the Telia AMP (Agent-based Market Place) project is developing will suffer from this problem.

The solution to this problem is to ensure that customers to a new Internet based market, such as AMP, can reach markets that already exist on the web, from within the new market. The present invention seeks to implement this solution by the use of a Market Integration Agent.

AMP is based on an agent infrastructure embracing information and interaction models which facilitate market interaction between agents. The models are based on real-world markets and model information, for example, customer interests, contracts, trade items, etc, and facilitate interactions such as searching for matching interests, negotiation, and settlement of deals. The Market Integration Agent of the present invention translates information and interactions between the agent-based market of AMP and another market, web based, or otherwise.

WO 96 23265 describes an agent-based system for accessing information. The agent based access system uses keyword sets to locate information of interest to a user together with user profiles such that pages being stored by one user can be notified to another whose profile indicates potential interest. The system is, however, not adapted for an electronic market place.

Currently there are no known Market Integration Agents that translate information and interactions from the web into an agent-based market infrastructure. The Jango shop-bot is probably the closest agent to the Market Integration Agent of the present invention, but Jango is really an advanced search engine for commercial information with features that make it possible to order items, rather than an electronic market platform. Jango does not translate information and interactions from the WWW to another format, it translates the information to an internal representation which is later shown to the user. The Market Integration Agent of the present invention will not only translate the information into an internal representation, but will also translate it into the agent communication protocol and, in this way, enable agents to Interact with non-agent markets in the same way as they interact with other agents.

According to a first aspect of the present invention, there is provided a telecommunications transmission system adapted to operate as a platform for an agent-based electronic market and including a plurality of user terminals arranged for connection to the Internet, at least one service provider server, and a plurality of electronic shops, said platform being arranged to support agent-based market interactions between a plurality of agent types, characterised in that one of said agent types is a Market Integration Agent adapted to translate information and interactions between said agent-based electronic market and web based markets or an agent-based market, said Market Integration Agent there being adapted to interact with agents of said agent-based market.

Said Market Integration Agent may have a first protocol stack and a second protocol stack, said first protocol stack may be adapted to facilitate communication with other agents of said plurality of agent types operating in said agent-based electronic market, and said second protocol stack may be adapted to interact with said other market.

Said first protocol stack may have three layers, namely:
- an information layer for handling market information;
- an interaction layer for handling agent messages; and
- a message transfer layer for handling message transfer via TCP, SMTP, HTTP.

A personal assistant agent may be adapted to interact with said Market Integration Agent by passing a message to said Market Integration Agent.

Said Market Integration Agent may be adapted to translate said message into an HTTP message.

Said Market Integration Agent may be adapted to receive data from said web-based or agent-based market and to translate said data into a format enabling communication between agents and the web-based market and between agents based or different technical platforms.

Said data received from said web-based or agent-based market may be an HTML page.

Said Market Integration Agent may be adapted to pass data received from said web-based or agent-based market to said personal assistant agent in a format enabling receipt of said data by the personal assistant agent.

Said information which said Market Integration Agent is adapted to translate may include: specifications of interests, contract and descriptions of trade items.

Said interactions which said Market Integration Agent is adapted to translate may include: searching for matching interests, negotiation of deals and settlement of deals.

Said Market Integration Agent may be adapted to handle message events which include: "Ask"; "Tell", "Negotiate"; "Offer"; "Accept"; "Decline"; and "Timeout".

According to a second aspect of the present invention, there is provided a service provider server adapted to operate with a telecommunications system as set forth in any previous paragraph, characterised in that said service provider server has resident therein a Market Integration Agent adapted to translate information and interactions between said agent-based electronic market and web-based or agent-based markets,
said Market Integration Agent than being adapted to interact with agents of said agent-based market.

Said Market Integration Agent may have a first protocol stack and a second protocol stack, said first protocol stack may be adapted to facilitate communication with other agents of said plurality of agent types operating in said agent-based electronic market, and said second protocol stack may be adapted to interact with said web-based or agent-based market.

Said first protocol stack may have three layers, namely:
- an information layer for handling market information;
- an interaction layer for handling agent messages; and
- a message transfer layer for handling message transfer via TCP, SMTP, HTTP.

- Said information which said Market Integration Agent is adapted to translate may include: specifications of interests, contract and descriptions of trade items.

Said interactions which said Market Integration Agent is adapted to translate may include: searching for matching interests, negotiation of deals and settlement of deals.

Said Market Integration Agent may be adapted to handle message events which include: "Ask"; "Tell", "Negotiate"; "Offer": "Accept"; "Decline"; and "Timeout".

According to a third aspect of the present invention, there is provided an electronic or optical signal modulated with an agent adapted for use with an agent-based electronic market, characterised in that said agent modulated signal carries a Market Integration Agent adapted to translate information and interactions between said agent-cased electronic market and web-based or agent-based markets said Market Integration Agent then being adapted to interact with agents of said agent-based market, and in that said Market Integration Agent is adapted to operate in a telecommunications transmission system as set forth in any preceding paragraph.

Said Market Integration Agent may have a first protocol stack and a second protocol stack, said first protocol stack may be adapted to facilitate communication with other agents of said plurality of agent types operating in said agent-based electronic market, and said second protocol stack may be adapted to interact with said web-based or agent-based market.

Said first protocol stack may have three layers, namely:
- an information layer for handling market information;
- an interaction layer for handling agent messages; and
- a message transfer layer for handling message transfer via TCP, SMTP, HTTP.

Said information which said Market Integration Agent is adapted to translate may include: specifications of interests, contract and descriptions of trade items.

Said interactions which said Market Integration Agent is adapted to translate may include: searching for matching interests, negotiation of deals and settlement of deals.

Said Market Integration Agent may be adapted to handle message events which include: "Ask"; "Tell", "Negotiate"; "Offer"; "Accept"; "Decline"; and "Timeout".

According to a fourth aspect of the present invention, there is a method for managing interactions between an agent-based electronic market and a web-based or agent-based market wherein a telecommunications transmission system, adapted to operate as a platform for an agent-based electronic market, includes a plurality of user terminals arranged for connection to the internet, at least one service provider server, and a plurality of electronic shops, said platform being arranged to support agent-based market interactions between a plurality of agent types, characterised by using a Market Integration Agent to translate information and interactions between said agent-based electronic market and said web-based or agent-based market, in the lister case
said Market Integration Agent interacting with agents of said other market.

Said Market Integration Agent may have a first protocol stack and a second protocol stack, said first protocol stack may be adapted to facilitate communication with other agents of said plurality of agent types operating in said agent-based electronic tronic market, and said second protocol stack may interact with said web-based or agent-based market.

Said first protocol stack may have three layers, namely:
- an information layer for handling market information;
- an interaction layer for handling agent messages; and
- a message transfer layer for handling message transfer via TCP, SMTP, HTTP.

A personal assistant agent may interact with said Market Integration Agent by passing a message to said Market Integration Agent.

Said Market Integration Agent may translate said message into an HTTP message.

Said Market Integration Agent may receive data from said web-based or agent based marker and translate said data into a format enabling receipt of data from the web-based market by agents and enabling receipt of the data from the agent-based market by agent based on different technical platforms.

Said data received from said web-based or agent based market may be an HTML page.

Said Market Integration Agent may pass data received from said web-based or agent-based market to said personal assistant agent in an agent communication format enabling receipt of the data by the personal assistant agent.

Said information which said Market Integration Agent translates may include: specifications of interests, contract and descriptions of trade items.

Said interactions which said Market Integration Agent translates may include: searching for matching interests, negotiation of deals and settlement of deals.

Said Market Integration Agent may handle message events which include: "Ask"; "Tell", "Negotiate"; "Offer": "Accept"; "Decline"; and "Timeout".

Embodiments of the invention will now be described, by way of example, with reference to the accompanying table and drawings, in which:
Table 1 shows the message/event types for an agent-based Auctioneer Service.
Figure 1 illustrates, in schematic form, the relationships between some of the basic functions and services that are employed in the AMP electronic platform.
Figure 2 illustrates the layer model used by the AMP service platform.
Figure 3 illustrates the operation of a translation agent; according to the present invention, that translates between different agent protocols and to, or from, traditional http-based web sites.
Figure 4 illustrates the use of the Telia WebButler graphical interface to monitor and control a personal agent.
Figure 5 shows the software modules used in the Telia WebButler.
Figure 6 shows the protocol stack for agents using the agent infrastructure.

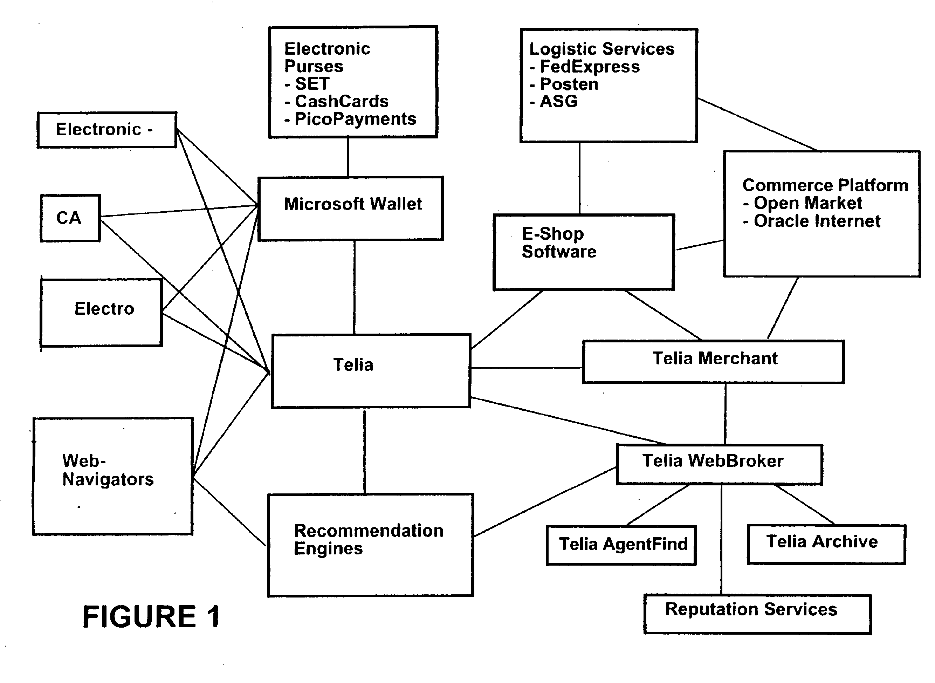

To fully appreciate the present invention, which relates to a particular type of agent, it is necessary to consider the operation of AMP. Figure 1 illustrates, in the form of a block diagram, a high-level overview of the relationships between some basic functions and products used in the AMP agent-based electronic commerce platform.

The some of the principle features of AMP which are not present in known products and services, based on agent orientated architectures, are set out below:
(a) AMP enables peer-to-peer autonomous communication between agents on the Internet. These can be agents representing users wanting to buy and/or sell goods and services, merchants, brokers, etc.. This approach has the advantage that any agent can initiate a communication with other agents, computer programs, at any time. The agents can understand the information they receive and take action autonomously. They can, therefore, fulfill complex requests from their owner. The disadvantage is that additional data has to be created to support machine-to-machine communication because, at the present time, the web is structured to support man-machine and not machine-machine communication.
(b) Because the agents can manage the interest descriptions of their owners, AMP facilitates the achievement of more powerful, realtime relationship marketing when the owner visits e-commerce stores on the web. It is also enables the merchant to develop a relationship with the owner/owners agent after that agent has visited his/her store.
(c) Based on its ability to support machine-to-machine communication, AMP makes it possible for users to specify, in a user-friendly manner, trigger-points when the user would like to come into the loop while the agent is working on a task. That could, for example, be when it is necessary to give an offer over a specified limit in a buying negotiation for a requested item.
(d) AMP gives the user a useful tool to facilitate obtaining status information about the different tasks the user's agent is working on. This, of course, also includes the capability to:
   - if desired, manually take-over control of different tasks from the agent; and
   - change trigger-points and other important parameters, etc..
(e) Since the agent, in AMP, is executing on a network operator's servers, for example, Telia's servers in their telecommunications network, the user can access the agent through any device, for example, a home computer, a computer at the user's place of work, a mobile PDA, and may even obtain notifications through pagers, GSM/SMS, etc.. This gives the user the additional benefit that he/she doesn't need to be connected on-line when the agent is working on the requested task while still giving the agent the ability to urgently notify the user, as and when required, through the user's preferred telecommunication service.
(f) Co-operation between agents, based on different technical platforms, is also achieved.
(g) Agents can interface services, such as reputation services, payment services, logistic services, etc..
(h) AMP supports e-mail communications which makes it possible to communicate through firewalls. This also creates a more easily used interface to EDI applications.

The forgoing mechanisms open-up new possibilities for electronic commerce in the consumer-to-consumer, the business-to-consumer, as well as, the business-to-business marketplace.

The Agent-based Market Place (AMP) introduces a new paradigm for the Internet which, in turn, opens up new possibilities for network operators, such as Telia, and their business customers, partners and consumers. In 1996, Telia developed a Market Space prototype, in co-operation with the Swedish Institute of Computer Science (STCS) and the Uppsala University, which implemented basic protocols and mechanisms for an AMP. The technical and commercial opportunities for AMP was successfully demonstrated by using the Market Space prototype in an electronic auction application.

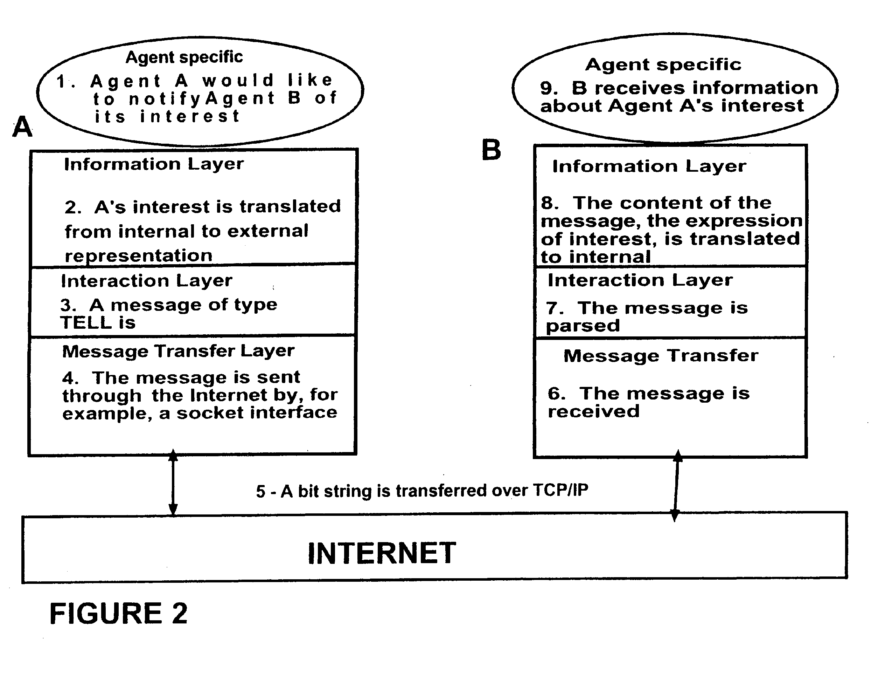

An Agent-based Electronic Commerce Service Platform supports Agent Applications with necessary mechanisms making it fast and easy to implement new types of agent functionality/behaviour for electronic commerce. In order to achieve flexibility, a layered architecture, such as the layered model of an Agent-based Service Platform diagrammatically illustrated, in the form of a block diagram, in Figure 2 of the accompanying drawings can be used. As illustrated in Figure 2, the different layers of the model are as follows :
(1) Agent Specific Layer:
   Where different behaviour/functionality for agent applications are implemented. Typical examples are Telia WebButler, Telia InfoBroker, Telia MerchantAssist, Telia AgentFind, Telia Archive, and Telia Auction.
(2) Information Layer:
   Translation from internal representation to the Agent Communication Protocol used between Agents. Could, for example, be KQML or something similar.
(3) Interaction Layer:
   Creation/Parsing of messages (see Figure 2).
(4) Message Transfer Layer:
   Managing the physical Internet transfer of messages utilizing mechanisms like sockets, for example.

The Agent-based Market Place (AMP) Service Platform focuses on supporting electronic commerce applications. Table 1 shows examples of messages managed in the Interaction Layer of Figure 2 for an auctioneer application. Other messages/event types can be created, if needed, for other applications, such as, index service, credit reporting service etc..

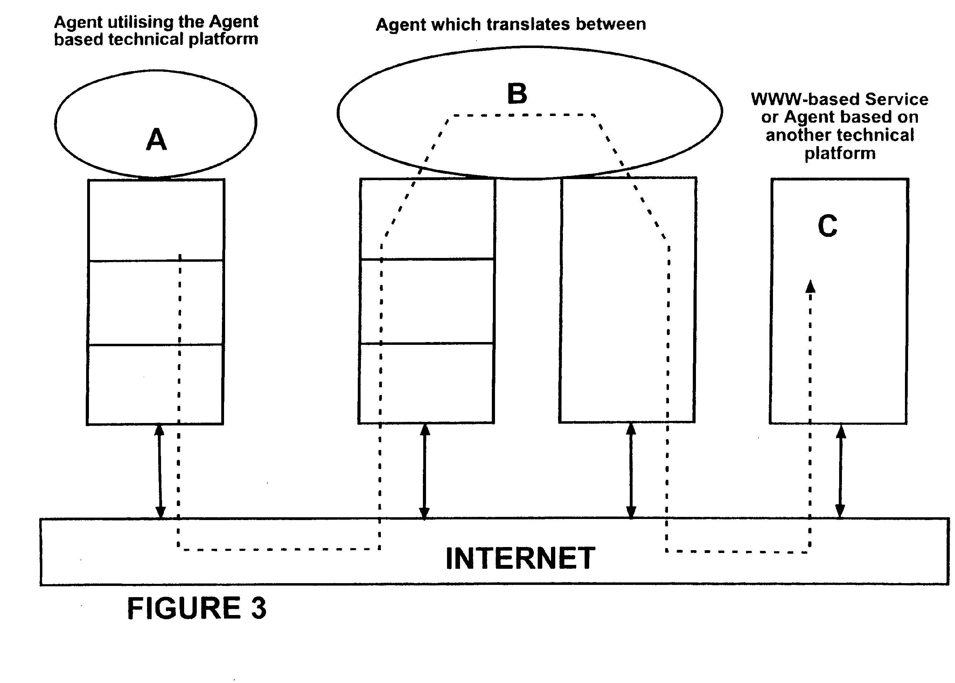

Another important aspect is that not all agents on the Internet will be based on this platform. It is, therefore, necessary to support an application that translates between different agent types. That service is also important when the agent applications access information based on traditional http format. Figure 3 of the accompanying drawings diagrammatically illustrates, in the form of a block diagram, the general layered architecture for this translation agent. The present invention is directed to this feature of AMP, which will be described in more detaile later in this specification.

A new type of index service, provided by Telia, which has similarities with the search engines on the web is called AgentFind. The role of AgentFind is to inform agents/WebButlers about other agents/WebButlers having corresponding interest profiles, in order to make it possible for those agents to find each other. An important difference between AMPS and HTTP-based search engines is that this database will change much more rapidly. It is, therefore, necessary to implement mechanisms in the ACP (Agent Communication Protocol) that support consistency management between the AgentFind database and the interests stored at the users WebButlers. Another key issue is the rating mechanism related to the level of conformity between the interest specifications of different WebButlers. This mechanism has, for example, to take into consideration if specific parameters have been specified as mandatory, or optional.

Dual Session Identification is a mechanism which makes it possible to synchronize a real-time session for a user on a commercial Web-site with the dialogue between the user's WebButler and the commercial Web-site's corresponding Merchant Assist functionality. This makes it possible to create personalized real-time promotions etc. based on a user's actual interest profile.

Market Integration Agent ACP-HTTP is a mechanism which makes it possible for WebButler and other agents to utilize ordinary http-based information from conventional web-sites.

Market Integration Agent AMP/ACP to other ACP is a mechanism which makes it possible for agents based on different technical platforms to communicate with each other.

Agent-based Payment Manager/Adaptor implements the functionality needed for managing payments from autonomous agents. The Payment Manager mechanisms utilize basic payment mechanisms provided by, for example, SEMPER.

Architecture for Agent-based Electronic Commerce Service Platform - this is the technical architecture the AMP services are built upon. It consist of an agent specific layer, an information layer, an interaction layer and a message transfer layer.

The Agent-based Market Place (AMP) services are as follows:
(A) Telia WebButler:
   - Negotiate and Auction;
   - Interest editor for contracts;
   - Trigger-point editor and priority;
   - Accessability and Notification;
   - Notification Calender;
   - Personal profile (address, interest, demography);
   - Plug-in's for different behaviour missions;
   - Message Box;
   - Advertisement Box;
   - Bookmarks to other agents;
   - Secure identification when accessing the personal WebButler ;
   - Identification during signing of contracts (CA, dig. signature, ...) ;
   - Restriction mechanisms (inherit from parent to child, ...) ;
   - Electronic wallet ; and
   - GUI.
(B) Telia InfoBroker :
   - Telia AgentFind (index service that links together agents with similar interests);
   - Telia Archive for signed contracts;
   - Distribution of personal advertisements;
   - Statistics of requested interests; and
   - Interface to Pay Service.
(C) Telia Merchant Assist:
   - Personal Advertisement Management;
   - Relationship advertisement and dynamic WWW-promotion related to individual users unique interests;
   - Loyalty programs ;
   - Interface to Telia Pay;
   - Interface to Telia Distribute; and
   - Statistics over consumer profiles.

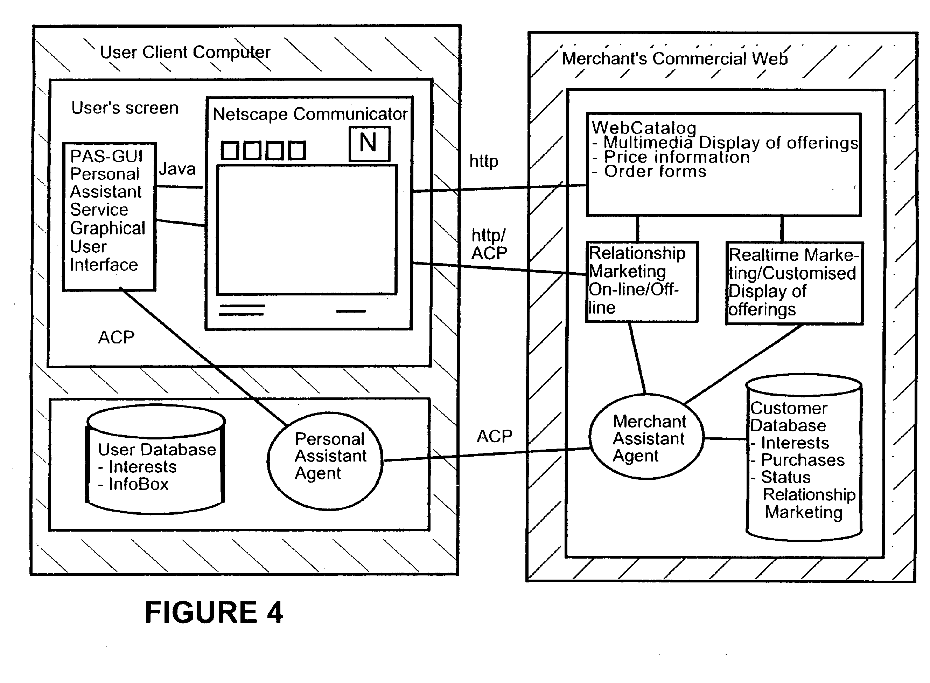

The Telia WebButler Service has a user friendly interface through which the user can interact with agent-based and conventional WWW-based services on the Internet. The service is used through a separate window on the user's computer (see Figure 4 of the accompanying drawings). This means that the Telia WebButler can co-operate with other services that the user accesses through TCP/IP, for example, through his/her conventional web-browser (Netscape, Explorer, etc.). It is, however, possible for the Telia WebButler to operate when the owner is disconnected from the network through e-mail EDI messages etc..

The benefit of WebButler is that the agent at the user's server and the agent at the visited web-site can communicate interests and transfer basic data between each other. The result is that there is no need for the person concerned to manually type-in requested information at the site. An even larger benefit for the user is that the site knows about the user's interest. This means that the user will be presented with, for him/her, valuable information directly by the site instead of receiving the standard information that all users receive. This is not only an advantage for the user, since commercial web-sites can use this information for relationship marketing, so that this information is valuable for both parties.

Figure 4 of the accompany drawings diagrammatically illustrates a User Client Computer and a Merchant's Commercial Web Server. The user can monitor and control his/her personal agent through a separate Telia WebButler Graphical User Interface on the screen. The primary purpose of the Telia WebButler service is, however, to control and monitor a personal agent which operates on a net-based server. This means that the user can initiate processes for the agent through any suitable device available at the time, for example, a home computer, a computer at his/her place of work, a mobile PDA with a cellular connection to the Internet, etc.. This, for example, enables the user to specify a negotiation strategy for the agent, trigger-points when the user will be informed/involved in further decisions etc., and to order the agent to begin the negotiation/bidding. The user can then disconnect himself/herself from the network and the agent will continue the task it is executing on a server, for example, Telia's server, in the network.

When a trigger-point is reached, the agent informs the user by means of the requested media. This could be through a message on the Telia WebButler, for example, complemented with a message on the user's pager, GSM/SMS etc., if the user has identified the trigger-point as urgent. The user can then access his WebButler through any available suitable device, to analyze the received information and give the agent further directions. The user can of course also elect to finish the bidding etc., manually, after the agent has completed the routine work necessary to reach this important point in the process.

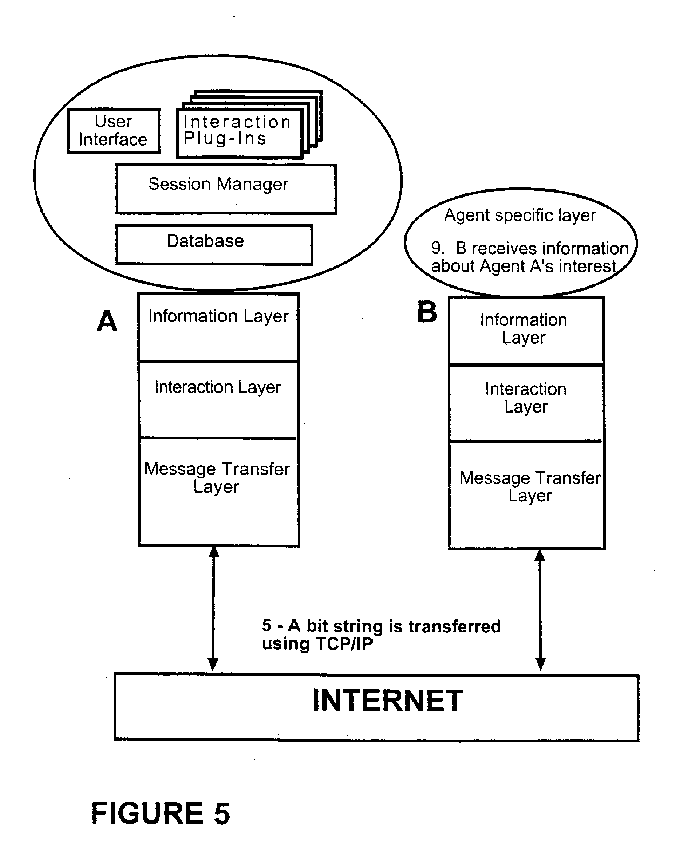

Figure 5 diagrammatically illustrates the different software modules in the Agent Specific layer implementing, in this case, the WebButler.

The User Interface of Figure 5 implements a user friendly window on the users screen. It is based on easily understandable icons for processes and events. When the user clicks on the icons, he/she receives more detailed information on current status, collected information etc.. The user can, in addition, easily control the agent's action by specifying trigger-points etc..

The Interaction Plug-Ins of Figure 5 implement the User Interface to different, or improved, agent applications/behaviour. For example, an agent specialized for electronic auctions (negotiation, strategy, etc.) may include an interface towards index agents necessary to obtain information concerning the location of interesting auctions which include specified items, credit reporting service making sure that the auctioneer's operation is run by a solid company etc.. The Interaction Plug-Ins, therefore, provide basic mechanisms for different kinds of applications/ behaviour.

The Session Manager of Figure 5 implements the management of the processes necessary to perform the requested tasks. This includes creation of the messages necessary to perform the task, interpretation of received messages, halting the process and notifying the owner of the agent if a trigger-point has been met etc.. The logic necessary to perform the requested tasks is, therefore, implemented in the Session Manager module.

The Database of Figure 5 manages all data necessary for operating the Personal Agent Service. This includes specifications of the owner's interests upon which the requested missions are based, messages received and transmitted, status information on the sessions, locally stored addresses to agents/agent sites which have worked well during earlier missions etc.. The database also stores the requested information which the agent collects through the mission in order to be able to present it to the owner as, and when, requested.

The Telia Merchant Assist includes the necessary functionality for providing realtime personalized promotions to visitors to commercial web sites. The mechanisms also support real-time marketing to consumers after a visit to the store.

The Telia InfoBroker Service includes Telia AgentFind, Telia Archive and Telia Auction. Telia MerchantAssist will have an interface to Telia Pay and Telia Distribute.

The InfoBroker Service sells:
- advertisement distribution to interested companies - the advertisements are attached to the WebButler's Ad-Box when requests are made from AgentFind; and
- market statistics collected by AgentFind when requests are made - this makes it possible for companies to identify product areas frequently requested by WebButlers and to compare the market's ability to satisfy the demand.

Telia Archive stores electronic contracts. Telia Distribute integrates necessary functionality for the delivery services.

The present invention is based on an agent infrastructure containing information and interaction models which enable market interaction between agents (these models are described above). The models are based on real-world markets and model information such as interests, contracts, trade items, etc, and interactions such as searching for matching interests, negotiation, and settlement of deals. The present invention relates to a Market Integration Agent, which translates information and interactions between the agent-based market and another market, web based, or otherwise. The Market Integration Agent is shown in Figure 3 as agent B.

Figure 3 shows how agent A uses, with the help of the Market Integration Agent B, a web-based service, for example, a web market place. The communication between A and B uses agent protocols and the communication between B and C would, in this case, be that B generates "HTTP-requests" to the service C. This gives B information which is then translated into the format of the agent protocol. Finally, B sends the translated information back to A.

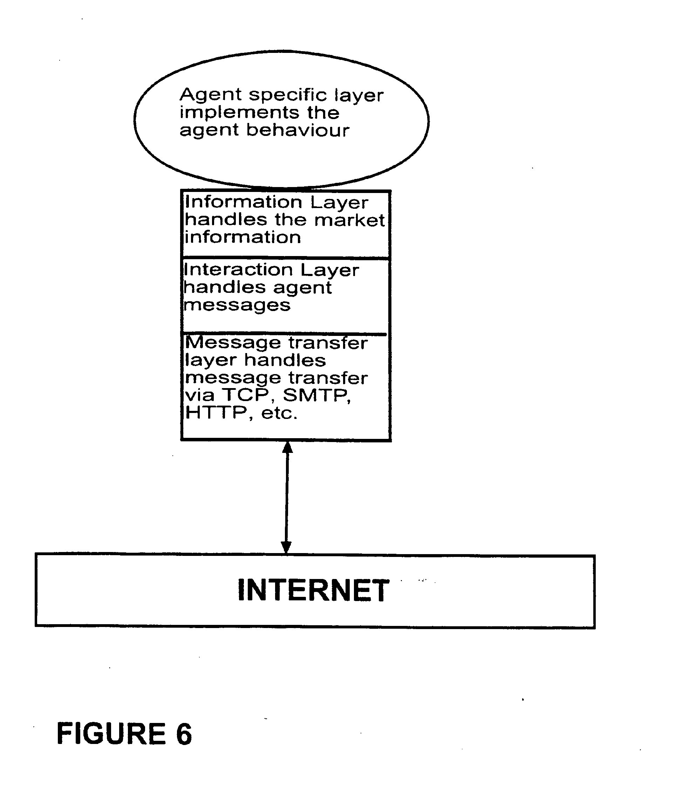

A Market Integration Agent has two protocol stacks, one of which facilitates interaction with other agents, using the agent infrastructure, see Figure 6, and one that is specific to the market place that it translates to and from. A typical example occurs when the Market Integration Agent translates a web store. In these circumstances it must act as a web client that can handle the store specific pages of the store's web site. It needs to translate information about items that the store sells which, in turn, means that the programmer of a Market Integration Agent, must understand how the information is shown on the web-pages. If the store can handle orders, the Market Integration Agent must also be able to translate the process of ordering from the web-page into the corresponding interaction, which would be an offer, in the protocol.

Figure 6 shows the protocol stack for agents using the agent infrastructure (used by agent A and B in Figure 3).

Consider an example:
Assume that the agents in Figure 3 are of the following types:
   A is a personal assistant agent for the user Alex, and that Alex is interested in buying a book called "Core Java";
   - B is a Market Integration Agent that integrates the web market place C; and
   - C is a web market place selling books.

The following process steps illustrate the operation of the Market Integration Agent:
1. Alex tells his personal assistant, A, that he is interested in buying a book entitled "Core Java". The personal assistant generates a question message (Ask) about that book and passes it to the Market Integration Agent B.
2. B receives the query and translates the information into an HTTP-request with the same information, e.g. a question about the book "Core Java", and sends it to the web market place, C.
3. C gets an HTTP request and responds to it in the usual way, by generating the appropriate HTML page.
4. B receives the HTTP response from C and translates the information from the format on the HTML-page into the agent communication format. B also generates a message, as a reply to the message received from A, which in this case is a "Tell" message, and sends it to A.
5. A receives the "Tell" message from B and the information about the price, availability, etc. of the book "Core Java" has now reached A.

This example shows, in the simplest possible terms, use of a Market Integration Agent to get information from a web market place into the agent-based market.

The Market Integration Agent of the present invention can be used in the Agent-Based market which is being developed in the AMP project. Market Integration Agents can be used to integrate existing web-stores (and other web-services) into the agent-based market. This allows both an easy transition to the agent infrastructure for owners of web-stores, and makes the market "interesting" for end-users by filling it with stores and information.

**Table 1**

| **RECEIVED MESSAGE EVENT** | **BEHAVIOU0R OF AUCTIONEER** |
|---|---|
| Ask (A, Auct, EOI) | A buy/sell request to A with a specification of the item/interest |
| Tell (A, Auct, EOI) | A proposal from A to buy/sell with a specification of the item/interest |
| Negotiate (A, Auct, EOI) | If EOI (Expression Of Interest) indicates that A is interested in buying what the Auct (Auctioneer) is selling, the last offer is sent to A in an Offer message. If there is no offer, the initial request is sent to A in a Negotiate message. A is then a participant in the auction and will receive information about given offers from other participants. |
| Offer(A, Auct, EOI) | If EOI corresponds to a new highest offer for the item on sale, this offer is distributed in Offer messages to all participants in the auction. In another case, the highest offer is sent back to A. If this was the first offer from A, A is included as a member in the auction. (The Offer message is legally binding, which is not the case for the negotiate message) |
| Accept (A, Auct) | A is informed by the auctioneer that his/her offer is accepted and the auction of the item is finished. |
| Decline (A, Auct) | If this message is sent from the Auctioneer, A is informed that the auction is finished and that somebody else purchased the item. If the same message is sent from A, the Auctioneer is informed that A is no longer interested in participating in the auction. A will not receive new offers. |
| Timeout (time) | The auction expires when the timeout message is received. The auction could either be operated during a specified time period, or the auction could end when the time period between two offers is longer than a specified time interval. |

## Claims

1. A telecommunications transmission system adapted to operate as a platform for a first agent-based electronic market and including a plurality of user terminals arranged for connection to the internet, at least one service provider server, and a plurality of electronic shops, said platform being arranged to support agent-based electronic market interactions between a plurality of agent of agent types comprised in agent-based electronic markets, **characterised in that** one of said agent types is a Market Integration Agent adapted to translate information and interactions to be exchanged between said first agent-based electronic market and web based electronic markets or between said first agent-based electronic market and a second agent-based market, said Market Integration Agent then being adapted to interact with agents of the second agent-based electronic market.

2. A telecommunications transmission system as claimed in any previous claim, **characterised in that** said Market Integration Agent has a first protocol stack and a second protocol stack, **in that** said first protocol stack is adapted to facilitate communication with other agents of said plurality of agent types operating in said agent-based electronic market, and **in that** said second protocol stack is adapted to interact with said web-based or second agent-based electronic.

3. A telecommunications transmission system as claimed in claim 2, **characterised in that** said first protocol stack has three layers, namely :
- an information layer for handling market information;
- an interaction layer for handling agent messages; and
- a message transfer layer for handling message transfer via TCP, SMTP, HTTP.

4. A telecommunications transmission system as claimed in any previous claim, **characterised in that** a personal assistant agent is adapted to interact with said Market Integration Agent by passing a message to said Market Integration Agent.

5. A telecommunications transmission system as claimed in claim 4, **characterised in that** said Market Integration Agent is adapted to translate said message into an HTTP message.

6. A telecommunications transmission system, as claimed in claims 4 or 5,
**characterised in that** said Market Integration Agent is adapted to receive data from said web-based or second agent-based electronic market and translate said data into a format enabling communication between agents and said web-based market and between agents based on different technical platforms.

7. A telecommunications transmission system as claimed in claim 6, **characterised in that** said data received from said web-based or second agent-based electronic market is an HTML page.

8. A telecommunications transmission system as claimed in either claim 6, or claim 7, **characterised in that** said Market Integration Agent is adapted to pass data received from said web-based or second agent-based electronic marked to said personal assistant agent in a format enabling receipt of said data by said personal assistant agent.

9. A telecommunications transmission system as claimed in any previous claim, **characterised in that** said information which said Market Integration Agent is adapted to translate includes: specifications of interests, contract and descriptions of trade items.

10. A telecommunications transmission system as claimed in any previous claim, **characterised in that** said interactions which said Market Integration Agent is adapted to translate include: searching for matching interests, negotiation of deals and settlement of deals.

11. A telecommunications transmission system, as claimed in any previous claim, **characterised in that** said Market Integration Agent is adapted to handle message events which include "Ask" ; "Tell", "Negotiate" ; "Offer" :"Accept" : "Decline" ; and "Timeouf".

12. A service provider server adapted to operate with a telecommunications transmission system as claimed in any of claims 1 to 11, **characterised in that** said service provider server has resident therein a Market Integration Agent adapted to translate information and interactions to be exchanged between a first agent-based electronic market and web-based markets or between said first agent-based electronic market and a second agent based market, said Market Integration Agent then being adapted to interact with agents of the second agent-based electronic market.

13. A service provider server as claimed in claim 12, **characterised in that** said Market Integration Agent has a first protocol stack and a second protocol stack, **in that** said first protocol stack is adapted to facilitate communication with other agents of said plurality of agent types operating in said agent-based electronic market, and **in that** said second protocol stack is adapted to interact with said web-based or second agent-based electronic market.

14. A service provider server as claimed in claim 13, **characterised in that** said first protocol stack has three layers, namely:
- an information layer for handling market information;
- an interaction layer for handling agent, messages ; and
- a message transfer layer for handling message transfer via TGP, SMTP, HTTP.

15. A service provider server as claimed in any of claims 12 to 14, **characterised in that** said information which said Market Integration Agent is adapted to translate includes: specifications of interests, contract and descriptions of trade items.

16. A. service provider server as claimed in any of claims 12 to 15, **characterised in that** said interactions which said Market Integration Agent is adapted to translate include: searching for matching interests, negotiation of deals and settlement of deals.

17. A service provider server as claimed in any of claims 12 to 16, **characterised in that** said Market Integration Agent is adapted to handle message events which include: "Ask"; "Tell", "Negotiate"; "Offer"; "Accept"; "Decline"; and "Timeout".

18. An electronic or optical signal modulated with an agent adapted for use with a first agent-based electronic market, **characterised in that** said agent modulated signal carries a Market integration Agent adapted to translate information and interactions to be exchanged between said agent-based electronic market and web-based markets, or between said first agent-based electronic market and a second agent-based electronic market, said Market Integration Agent then being adapted to interact with agents of the second agent-based electronic market, and **in that** said Market Integration Agent is adapted to operate in a telecommunications transmission system as claimed in any of claims 1 to 11.

19. An electronic or optical signal as claimed in claim 18, **characterised in that** said Market Integration Agent has a first protocol stack and a second protocol stack, **in that** said first protocol stack is adapted to facilitate communication with other agents of said plurality of agent types operating in said agent-based electronic market, and **in that** said second protocol stack is adapted to interact with said web-based or second agent-based electronic market.

20. An electronic or optical signal as claimed in claim 19, **characterised in that** said first protocol stack has three layers, namely:
- an information layer for handling market information;
- an interaction layer for handling agent messages; and
- a message transfer layer for handling message transfer via TCP, SMTP, HTTP.

21. An electronic or optical signal as claimed in any of claims 18 to 20, **characterised in that** said information which said Market Integration Agent is adapted to translate includes: specifications of interests, contract and descriptions of trade items.

22. An electronic or optical signal as claimed in any of claims 18 to 21, **characterised in that** said interactions which said Market Integration Agent is adapted to translate include: searching for matching interests, negotiation of deals and settlement of deals.

23. An electronic or optical signal, as claimed in any of claims 18 to 22, **characterised in that** said Market Integration Agent is adapted to handle message events which include: "Ask"; "Tell", "Negotiate"; "Offer"; "Accept"; "Decline"; and "Timeout".

24. A method for managing interactions between a first agent-based electronic market and a web-based or second agent-based electronic market, wherein a telecommunication transmission system adapted to operate as a platform for the first agent-based electronic market includes a plurality of user terminals arranged for connection to the internet, at least one service provider server, and a plurality of electronic shops, said platform being arranged to support agent-based market interactions between a plurality of agent types comprised in agent-based electronic markets, **characterised by** using a Market Integration Agent to translate information and interactions to be exchanged between said first agent-based electronic market an said web-based or between said first agent-based electronic market and the second agent-based electronic market said Market integration. Agent interacting with agents of the second agent-based electronic market.

25. A method as claimed in claim 24, **characterised by** said Market Integration Agent having a first protocol stack and a second protocol stack, said first protocol stack being adapted to facilitate communication with other agents of said plurality of agent types operating in said agent-based electronic market, and said second protocol stack interacting with said web-based or second agent-based electronic market.

26. A method as claimed in claim 25, **characterised by** said first protocol stack having three layers, namely:
an information layer for handling market information;
an interaction layer for handling agent messages; and
- a message transfer layer for handling message transfer via TCP, SMTP, HTTP.

27. A method as claimed in any of claims 24 to 26, **characterised by** a personal assistant agent interacting with said Market Integration Agent by passing a message to said Market Integration Agent.

28. A method, as claimed in claim 27, **characterised by** said Market integration Agent translating said message into an HTTP message.

29. A method as claimed in any of claims 27 or 28, **characterised by** said Market Integration Agent receiving data from said web-based or second agent-based electronic market and translating and translating said data into a format enabling receipt of data from said web-based market by agents and enabling receipt of said data from said agent-based market by agents based or different technical platforms.

30. A method, as claimed in claim 39, **characterised by** said data received from said web-based or second agent-based electronic market being an HTML page.

31. A method as claimed in either claim 29, or claim 30, **characterised by** said Market Integration Agent passing data received from said web-based or second agent-based electronic market to said personal assistant agent in an agent communication format enabling receipt of said data by said personal assistant agent.

32. A method as claimed in any of claims 24 to 31, **characterised by** said information which said Market Integration Agent translates including: specifications of interests, contract and descriptions of trade items.

33. A method, as claimed in any of claims 24 to 32, **characterised by** said interactions which said Market Integration Agent translates including: searching for matching interests, negotiation of deals and settlement of deals.

34. A method as claimed in any of claims 24 to 33, **characterised by** said Market Integration Agent handling message events which include: "Ask"; "Tell", "Negotiate"; "Offer"; "Accept"; "Decline"; and "Timeout".

## Patentansprüche

1. Telekommunikationsübertragungssystem, das dazu ausgebildet ist, als eine Plattform für einen ersten auf Agenten beruhenden elektronischen Markt zu arbeiten und eine Mehrzahl von Benutzerendgeräten, die für Verbindung mit dem Internet angeordnet sind, wenigstens einen Dienstproviderserver und eine Mehrzahl von elektronischen Läden einschließt, welche Plattform dazu ausgebildet ist, auf Agenten beruhende elektronische Marktwechselwirkungen zwischen einer Mehrzahl von Agententypen, die in auf Agenten beruhenden elektronischen Märkten enthalten sind, **dadurch gekennzeichnet, dass** einer der Agententypen ein Marktintegrationsagent ist, der dazu ausgebildet ist, Information und Wechselwirkungen zu übersetzen, die zwischen dem ersten auf Agenten beruhenden elektronischen Markt und auf dem Web beruhenden elektronischen Märkten oder zwischen dem ersten auf Agenten beruhenden elektronischen Markt und einem zweiten auf Agenten beruhenden Markt ausgetauscht werden sollen, wobei der Marktintegrationsagent dann dazu ausgebildet ist, Agenten des zweiten auf Agenten beruhenden Markts zu wechselwirken.

2. Telekommunikationsübertragungssystem nach einem vorangehenden Anspruch, **dadurch gekennzeichnet, dass** der Marktinterationsagent einen ersten Protokollstapel und einen zweiten Protokollstapel hat, dass der erste Protokollstapel dazu ausgebildet ist, Kommunikation mit anderen Agenten der Mehrzahl von Agententypen zu erleichtern, die in dem auf Agenten beruhenden elektronischen Markt operieren, und das der zweite Protokollstapel dazu ausgebildet ist, mit dem auf dem Web beruhenden oder zweiten auf Agenten beruhenden elektronischen Markt zu wechselwirken.

3. Telekommunikationsübertragungssystem nach Anspruch 2, **dadurch gekennzeichnet, dass** der erste Protokollstapel drei Schichten hat, nämlich:
- eine Informationsschicht zum Handhaben von Marktinformation;
- eine Wechselwirkungsschicht für Handhabung von Agentenmeldungen; und
- eine Meldungsübertragungsschicht zum Handhaben von Meldungsübertragung über TCP, SMTP, HTTP.

4. Telekommunikations übertragungs system nach einem vorangehenden Anspruch, **dadurch gekennzeichnet, dass** ein persönlicher Assistenzagent dazu ausgebildet ist, mit dem Marktintegrationsagenten zu wechselwirken, indem er eine Meldung an den Marktintegrationsagenten weiterleitet.

5. Telekommunikationsübertragungssystem nach Anspruch 4, **dadurch gekennzeichnet, dass** der Marktintegrationsagent dazu ausgebildet ist, die Meldung in eine HTTP-Meldung zu übersetzen.

6. Telekommunikationsübertragungssystem nach den Ansprüchen 4 oder 5, **dadurch gekennzeichnet, dass** der Marktintegrationsagent dazu ausgebildet ist, Daten von dem auf dem Web beruhenden oder dem zweiten auf Agenten beruhenden elektronischen Markt zu empfangen und die Daten in ein Format zu übersetzen, das Kommunikation zwischen Agenten und dem auf dem Web beruhenden Markt und zwischen Agenten ermöglicht, die auf unterschiedlichen technischen Plattformen basieren.

7. Telekommunikationsübertragungssystem nach Anspruch 6, **dadurch gekennzeichnet, dass** die von dem auf dem Web beruhenden oder von dem zweiten auf Agenten beruhenden elektronischen Markt empfangenen Daten eine HTML-Datenseite sind.

8. Telekommunikationsübertragungssystem nach entweder Anspruch 6 oder Anspruch 7, **dadurch gekennzeichnet, dass** der Marktintegrationsagent dazu ausgebildet ist, Daten, die er von dem auf dem Web beruhenden oder dem zweiten auf Agenten beruhenden elektronischen Markt empfangen hat, zu dem persönlichen Assistenzagenten in einem Format weiterzuleiten, das Empfang der Daten durch den persönlichen Assistenzagenten ermöglicht.

9. Telekommunikations übertragungs system nach einem vorangehenden Anspruch, **dadurch gekennzeichnet, dass** die Information, die der Marktintegrationsagent zu übersetzen ausgebildet ist, einschließt:
Spezifikationen von Interessen, Vertrag und Beschreibungen von Handelsgegenständen.

10. Telekommunikations übertragungs system nach einem vorangehenden Anspruch, **dadurch gekennzeichnet, dass** die Wechselwirkungen, die zu übersetzen der Marktintegrationsagent ausgebildet ist, einschließen: nach zusammenpassenden Interessen suchen, Verhandlungen von Geschäften und Abschluss von Geschäften.

11. Telekommunikationsübertragungssystem nach einem vorangehenden Anspruch, **dadurch gekennzeichnet, dass** der Marktintegrationsagent dazu ausgebildet ist, Meldungsereignisse zu handhaben, die einschließen:
"frage"; "sage", "verhandle"; "biete an"; "nehme an"; "verweigere" und "Zeitbegrenzung".

12. Dienstproviderserver, der dazu ausgebildet ist, mit einem Telekommunikationsübertragungssystem nach einem der Ansprüche 1 bis 11 zu arbeiten, **dadurch gekennzeichnet, dass** der Dienstproviderserver darin resident einen Marktintegrationsagenten aufweist, der dazu ausgebildet ist, Information und Wechselwirkungen zu übersetzen, die zwischen einem ersten auf Agenten beruhenden elektronischen Markt und auf dem Web beruhenden Märkten oder zwischen dem ersten auf Agenten beruhenden elektronischen Markt und einem zweiten auf Agenten beruhenden Markt ausgetauscht werden sollen, wobei der Marktintegrationsagent dann dazu ausgebildet ist, mit Agenten des zweiten auf Agenten beruhenden elektronischen Markts zu wechselwirken.

13. Dienstproviderserver nach Anspruch 12, **dadurch gekennzeichnet, dass** der Marktintegrationsagent einen ersten Protokollstapel und einen zweiten ProtokollStapel hat, dass der erste Protokollstapel dazu ausgebildet ist, Kommunikation mit anderen Agenten oder der Mehrzahl von Agententypen zu erleichtern, die in dem auf Agenten beruhenden elektronischen Markt operieren, und dass der zweite Protokollstapel dazu ausgebildet ist, mit dem auf Web beruhenden oder zweiten auf Agenten beruhenden elektronischen Markt zu wechselwirken.

14. Dienstproviderserver nach Anspruch 13, **dadurch gekennzeichnet, dass** der erste Protokollstapel drei Schichten hat, nämlich:
- eine Informationsschicht zum Handhaben von Marktinformation;
- eine Wechselwirkungsschicht zum Handhaben von Agentenmeldungen; und
- eine Meldungsübertragungsschicht zum Handhaben von Meldungsübertragung über TCP, SMTP, HTTP.

15. Dienstproviderserver nach einem der Ansprüche 12 bis 14, **dadurch gekennzeichnet, dass** die Information, die zu übersetzen der Marktintegrationsagent ausgebildet ist, einschließt:
Spezifikationen von Interessen, Vertrag und Beschreibungen von Handelsgegenständen.

16. Dienstproviderserver nach einem der Ansprüche 12 bis 15, **dadurch gekennzeichnet, dass** die Wechselwirkungen, die der Marktintegrationsagent zu übersetzen ausgebildet ist, einschließen: nach zusammenpassenden Interessen suchen, Verhandlung von Geschäften und Abschluss von Geschäften.

17. Dienstproviderserver nach einem der Ansprüche 12 bis 16, **dadurch gekennzeichnet, dass** der Marktintegrationsagent dazu ausgebildet ist, Meldungsereignisse zu handhaben, die einschließen:
"frage"; "sage"; "verhandle"; "biete an"; "nehme an"; "lehne ab"; und "Zeitbegrenzung".

18. Elektronisches oder optisches Signal, das mit einem Agenten moduliert ist, das für Benutzung mit einem ersten auf Agenten beruhenden Markt ausgebildet ist, **dadurch gekennzeichnet, dass** das agentenmodulierte Signal einen Marktintegrationsagenten trägt, der dazu ausgebildet ist, Information und Wechselwirkungen zu übersetzen, die zwischen dem auf Agenten beruhenden elektronischen Markt und auf Web beruhenden Märkten oder zwischen dem ersten auf Agenten beruhenden elektronischen Markt und einem zweiten auf Agenten beruhenden elektronischen Markt ausgetauscht, werden sollen, wobei der Marktintegrationsagent dann dazu ausgebildet ist, mit Agenten des zweiten auf Agenten beruhenden elektronischen Marktes zu wechselwirken, und dass der Marktintegrationsagent dazu ausgebildet ist, in einem Telekommunikationsübertragungssystem nach einem der Ansprüche 1 bis 11 zu operieren.

19. Elektronisches oder optisches Signal nach Anspruch 18, **dadurch gekennzeichnet, dass** der Marktintegrationsagent einen ersten Protokollstapel und einen zweiten Protokollstapel hat, dass der erste Protokollstapel dazu ausgebildet ist, Kommunikation mit anderen Agenten der Mehrzahl von Agententypen zu erleichtern, die in dem auf Agenten beruhenden elektronischen Markt operieren, und dass das zweite Protokollstapel dazu ausgebildet ist, mit dem auf dem Web beruhenden oder dem zweiten auf Agenten beruhenden elektronischen Markt zu wechselwirken.

20. Elektronisches oder optisches Signal nach Anspruch 19, **dadurch gekennzeichnet, dass** der erste Protokollstapel drei Schichten hat, nämlich:
- eine Informationsschicht zum Handhaben von Marktinformation;
- eine Wechselwirkungsschicht zum Handhaben von Agentenmeldungen; und
- eine Meldungsübertragungsschicht zum Handhaben von Meldungsübertragung über TCP, SMTP, HTTP.

21. Elektronisches oder optisches Signal nach einem der Ansprüche 18 bis 20, **dadurch gekennzeichnet, dass** die Information, die der Marktintegrationsagent zu übersetzen ausgebildet ist, einschließt:
Spezifikationen von Interessen, Vertrag und Beschreibungen von Handelsgegenständen.

22. Elektronisches oder optisches Signal nach einem der Ansprüche 18 bis 21, **dadurch gekennzeichnet, dass** die Wechselwirkungen, die der Marktintegrationsagent zu übersetzen ausgebildet ist, einschließen : Suchen nach zusammenpassenden Interessen, Verhandlung von Geschäften und Abschluss von Geschäften.

23. Elektronisches oder optisches Signal nach einem der Ansprüche 18 bis 22, **dadurch gekennzeichnet, dass** der Marktintegrationsagent dazu ausgebildet ist, Meldungsereignisse zu handhaben, die einschließen :
"frage" ; "sage" ; "verhadle" ; "biete an" ; "nehme an" ; "lehne ab" ; und "Zeitbegrenzung"

24. Verfahren zum Verwalten von Wechselwirkungen zwischen einem ersten auf Agenten beruhenden elektronischen Markt und einem auf Web beruhenden oder einem zweiten auf Agenten beruhenden elektronischen Markt, wobei ein Telekommunicationsübertragungssystem, das dazu ausgebildet ist, als eine Plattform für den ersten auf Agenten beruhenden elektronischen Markt zu arbeiten, eine Mehrzahl von Benutzerendgeräten, die für Verbindung mit dem Internet ausgebildet sind, wenigstens einen Dienstproviderserver und eine Mehrzahl von elektronischen Läden einschließt, welche Plattform dazu ausgebildet ist, auf Agenten beruhende Marktwechselwirkungen zwischen einer Mehrzahl von Agententypen zu unterstützen, die in auf Agenten beruhenden elektronischen Märkten enthalten sind, **gekennzeichnet durch** Verwendung eines Marktintegrationsagenten, um Information und Wechselwirkungen zu übersetzen, die zwischen dem ersten auf Agenten beruhenden elektronischen Markt und dem auf dem Web beruhenden oder zwischen dem ersten auf Agenten beruhenden elektronischen Markt und dem zweiten auf Agenten beruhenden elektronischen Markt ausgetauscht werden sollen, welcher Marktintegrationsagent mit Agenten des zweiten auf Agenten beruhenden elektronischen Markts wechselwirkt.

25. Verfahren nach Anspruch 24, **dadurch gekennzeichnet, dass** der Marktintegrationsagent einen ersten Protokollstapel und einen zweiten Protokollstapel hat, welcher erster Protokollstapel dazu ausgebildet ist, Kommunikation mit anderen Agenten der Mehrzahl von Agententypen zu erleichtern, die in dem zweiten auf Agenten beruhenden elektronischen Markt operieren, und wobei der zweite Protokollstapel mit dem auf dem Web beruhen oder zweiten auf Agenten beruhenden elektronischen Markt wechselwirkt.

26. Verfahren nach Anspruch 25, **dadurch gekennzeichnet, dass** der erste Protokollstapel drei Schichten hat, nämlich:
- eine Informationsschicht zum Handhaben von Marktinformation;
- eine Wechselwirkungsschicht zum Handhaben von Agentenmeldungen; und
- eine Meldungsübertragungsschicht zum Handhaben von Meldungsübertragung über TCP, SMTP, HTTP.

27. Verfahren nach einem der Ansprüche 24 bis 26, **gekennzeichnet durch** einen persönlichen Assistenzagenten, der mit dem Marktintegrationsagenten **dadurch** wechselwirkt, dass er eine Meldung zu dem Marktintegrationsagenten weiterleitet.

28. Verfahren nach Anspruch 27, **dadurch gekennzeichnet, dass** der Marktintegrationsagent die Meldung in eine HTTP-Meldung übersetzt.

29. Verfahren nach einem der Ansprüche 27 oder 28, **dadurch gekennzeichnet, dass** der Marktintegrationsagent Daten von dem auf Web beruhenden oder zweiten auf Agenten beruhenden elektronischen Markt empfängt und die Daten in ein Format übersetzt, das Empfang von Daten von dem auf Web beruhenden Markt durch Agenten ermöglicht und Empfang der Daten von dem auf Agenten beruhenden Markt durch Agenten ermöglicht, die auf unterschiedlichen technischen Plattformen basieren.

30. Verfahren nach Anspruch 29, **dadurch gekennzeichnet, dass** die Daten, die von dem auf Web beruhenden oder zweiten auf Agenten beruhenden elektronischen Markt empfangen werden, eine HTML-Seite sind.

31. Verfahren nach entweder Anspruch 29 oder Anspruch 30, **dadurch gekennzeichnet, dass** der Marktintegrationsagent Daten, die er vom auf Web beruhenden oder vom zweiten auf Agenten beruhenden elektronischen Markt empfangen hat, an den persönlichen Assistentenagenten, in einem Agentenkommunikationsformat weiterleitet, was Empfang dieser Daten durch den persönlichen Assistentenagenten ermöglicht.

32. Verfahren nach einem der Ansprüche 24 bis 31, **dadurch gekennzeichnet, dass** die Information, die der Marktintegrationsagent übersetzt, einschließt: Spesifikationen von Interessen, Vertrag und Beschreibung von Handelsgegenständen.

33. Verfahren nach einem der Ansprüche 24 bis 32, **dadurch gekennzeichnet, dass** die Wechselwirkungen, die der Marktintegrationsagent übersetzt, einschließen: suchen nach zusammenpassenden Interessen, Verhandlung von Geschäften und Abschluss von Geschäften.

34. Verfahren nach einem der Ansprüche 24 bis 33, **dadurch gekennzeichnet, dass** der Marktintegrationsagent Meldungsereignisse handhabt, die einschließen: "frage"; "sage"; "verhandle" ; "biete an" ; "nehme an" ; "lehne ab"; und "Zeitbegrenzung".

## Revendications

1. Système de transmission de télécommunication adapté pour fonctionner en tant que plate-forme pour un premier marché électronique basé sur des agents et comprenant une pluralité de terminaux utilisateurs agencés pour une connexion à Internet, au moins un serveur de fournisseur de service, et une pluralité de magasins électroniques, ladite plate-forme étant agencée pour supporter les interactions du marché électronique basé sur les agents entre une pluralité de types d'agents compris dans les marchés électroniques basés sur les agents, **caractérisé en ce qu'**un desdits types d'agents est un agent d'intégration de marché adapté pour convertir des informations et des interactions à échanger entre ledit premier marché électronique basé sur les agents et des marchés électroniques basé sur le Web ou entre ledit premier marché électronique basé sur les agents et un second marché basé sur les agents, ledit agent d'intégration de marché étant alors adapté pour interagir avec des agents du second marché électronique basé sur les agents.

2. Système de transmission de télécommunication selon la revendication précédente, **caractérisé en ce que** ledit agent d'intégration de marché comporte une première pile de protocole et une seconde pile de protocole, **en ce que** ladite première pile de protocole est adaptée pour faciliter la communication avec d'autres agents de ladite pluralité de types d'agents opérant dans ledit marché électronique basé sur les agents, et **en ce que** ladite seconde pile de protocole est adaptée pour interagir avec ledit second marché électronique basé sur les agents ou marché électronique basé sur le Web.

3. Système de transmission de télécommunication selon la revendication 2, **caractérisé en ce que** ladite première pile de protocole comporte trois couches, à savoir :
- une couche d'informations pour manipuler les informations de marché ;
- une couche d'interaction pour manipuler les messages d'agent ; et
- une couche de transfert de message pour manipuler le transfert de message via TCP, SMTF, HTTP.

4. Système de transmission de télécommunication selon l'une quelconque des revendications précédentes, **caractérisé en ce qu'**un agent assistant personnel est adapté pour interagir avec ledit agent d'intégration de marché en passant un message audit agent d'intégration de marché.

5. Système de transmission de télécommunication selon la revendication 4, **caractérisé en ce que** ledit agent d'intégration de marché est adapté pour convertir ledit message en un message HTTP.

6. Système de transmission de télécommunication selon les revendications 4 ou 5, **caractérisé en ce que** ledit agent d'intégration de marché est adapté pour recevoir des données dudit second marché électronique basé sur les agents ou marché électronique basé sur le Web et pour convertir lesdites données dans un format permettant la communication entre des agents et ledit marché électronique basé sur le Web et entre des agents basés sur différentes plates-formes techniques.

7. Système de transmission de télécommunication selon la revendication 6, **caractérisé en ce que** lesdites données reçues dudit second marché électronique basé sur les agents ou marché électronique basé sur le Web sont une page HTML.

8. Système de transmission de télécommunication selon l'une quelconque de la revendication 6 ou de la revendication 7, **caractérisé en ce que** ledit agent d'intégration de marché est adapté pour passer des données reçues dudit second marché électronique basé sur les agents ou marché électronique basé sur le Web audit agent assistant personnel dans un format permettant la réception desdites données par ledit agent assistant personnel.

9. Système de transmission de télécommunication selon l'une quelconque des revendications précédentes, **caractérisé en ce que** lesdites informations que ledit agent d'intégration de marché est adapté pour convertir comprennent : des spécifications d'intérêt, un contrat et des descriptions d'articles commerciaux.

10. Système de transmission de télécommunication selon l'une quelconque des revendications précédentes, **caractérisé en ce que** lesdites interactions que ledit agent d'intégration de marché est adapté pour convertir comprennent : la recherche d'intérêts concordants, la négociation de marchés et le règlement de marché.

11. Système de transmission de télécommunication selon l'une quelconque des revendications précédentes, **caractérisé en ce que** ledit agent d'intégration de marché est adapté pour manipuler les événements de message qui comprennent : « Demander » ; « Dire » ; « Négocier » ; « Offrir » ; « Accepter » ; « Décliner » ; et « Attendre ».

12. Serveur de fournisseur de service adapté pour fonctionner avec un système de transmission de télécommunication selon l'une quelconque des revendications 1 à 11, **caractérisé en ce que** dans ledit serveur de fournisseur de service réside un agent d'intégration de marché adapté pour convertir des informations et des interactions à échanger entre un premier marché électronique basé sur les agents et des marchés basés sur le Web ou entre ledit premier marché électronique basé sur les agents et un second marché basé sur les agents, ledit agent d'intégration de marché étant alors adapté pour interagir avec les agents du second marché électronique basé sur les agents.

13. Serveur de fournisseur de service selon la revendication 12, **caractérisé en ce que** ledit agent d'intégration de marché comporte une première pile de protocole et une seconde pile de protocole, **en ce que** ladite première pile de protocole est adaptée pour faciliter la communication avec d'autres agents de ladite pluralité de types d'agents opérant dans ledit marché électronique basé sur les agents, et **en ce que** ladite seconde pile de protocole est adaptée pour Interagir avec ledit second marché électronique basé sur les agents ou marché électronique basé sur le Web.

14. Serveur de fournisseur de service selon la revendication 13, **caractérisé en ce que** ladite première pile de protocole comporte trois couches, à savoir :
- une couche d'informations pour manipuler les informations de marché;
- une couche d'interaction pour manipuler des messages d'agents ; et
- une couche de transfert de message pour manipuler le transfert de message via TCP, SMTP, HTTP.

15. Serveur de fournisseur de service selon l'une quelconque des revendications 12 à 14, **caractérisé en ce que** lesdites informations que ledit agent d'intégration de marché est adapté pour convertir comprennent : des spécifications d'intérêt, un contrat et des descriptions d'articles commerciaux.

16. Serveur de fournisseur de service selon l'une quelconque des revendications 12 à 15, **caractérisé en ce que** lesdites interactions que ledit agent d'intégration de marché est adapté pour convertir comprennent : la recherche d'intérêts concordants, la négociation de marchés et le règlement de marchés.

17. Serveur de fournisseur de service selon l'une quelconque des revendications 12 à 16, **caractérisé en ce que** ledit agent d'intégration de marché est adapté pour manipuler des éléments de message qui comprennent : « Demander » ; « Dire » ; « Négocier » ; « Offrir » ; « Accepter » ; « Décliner » ; et « Attendre ».

18. Signal électronique ou optique modulé avec un agent adapté pour une utilisation avec un premier marché électronique basé sur les agents, **caractérisé en ce que** ledit signal modulé avec un agent porte un agent d'intégration de marché adapté pour convertir des informations et des interactions à échanger entre ledit marché électronique basé sur les agents et des marchés basés sur le Web ou entre ledit premier marché électronique basé sur les agents et un second marché électronique basé sur les agents, ledit agent d'intégration de marché étant alors adapté pour interagir avec des agents du second marché électronique basé sur les agents et **en ce que** ledit agent d'intégration de marché est adapté pour fonctionner dans un système de transmission de télécommunication selon l'une quelconque des revendications 1 à 11.

19. Signal électronique ou optique selon la revendication 18, **caractérisé en ce que** ledit agent d'intégration de marché comporte une première pile de protocole et une seconde pile de protocole, **en ce que** ladite première pile de protocole est adaptée pour faciliter la communication, avec d'autres agents de ladite pluralité de types d'agents opérant dans ledit marché électronique basé sur les agents, et **en ce que** ladite seconde pile de protocole est adaptée pour interagir avec ledit second marché électronique basé sur les agents ou marché électronique basé sur le Web.

20. Signal électronique ou optique selon la revendication 19, **caractérisé en ce que** ladite première pile de protocole comporte trois couches, à savoir :
- une couche d'informations pour manipuler des informations de marché ;
- une couche d'interaction pour manipuler des messages d'agents; et
- une couche de transfert de message pour manipuler le transfert de message via TCP, SMTP, HTTP.

21. Signal électronique ou optique selon l'une quelconque des revendications 18 à 20, **caractérisé en ce que** lesdites informations que ledit agent d'intégration de marché est adapté pour convertir comprennent : des spécifications d'intérêts, un contrat et des descriptions d'articles commerciaux.

22. Signal électronique ou optique selon l'une quelconque des revendications 18 à 21, **caractérisé en ce que** lesdites interactions que ledit agent d'intégration de marché est adapté pour convertir comprennent : la recherche d'intérêts concordants, la négociation de marchés et le règlement de marchés.

23. Signal électronique ou optique selon l'une quelconque des revendications 18 à 22, **caractérisé en ce que** ledit agent d'intégration de marché est adapté pour manipuler des événements de message qui comprennent : « Demander » ; « Dire » ; « Négocier » ; « Offrir » ; « Accepter » ; « Décliner » ; et « Attendre ».

24. Procédé de gestion des interactions entre un premier marché électronique basé sur les agents et un second marché électronique basé sur les agents ou marché électronique basé sur le Web, dans lequel un système de transmission de télécommunication adapté pour fonctionner en tant que plate-forme pour le premier marché électronique basé sur les agents comprend une pluralité de terminaux utilisateurs agencés pour une connexion à Internet, au moins un serveur de fournisseur de service, et une pluralité de magasins électroniques, ladite plate-forme étant agencée pour supporter des interactions du marché basé sur les agents entre une pluralité de types d'agents compris dans des marchés électroniques basés sur les agents, **caractérisé par** l'utilisation d'un agent d'intégration de marché pour convertir des informations et des interactions à échanger entre ledit premier marché électronique basé sur les agents et lesdits marchés basés sur le Web ou entre ledit premier marché électronique basé sur les agents et le second marché d'intégration de marché interagissant avec des agents du second marché électronique basé sur les agents.

25. Procédé selon la revendication 24, **caractérisé en ce que** ledit agent d'intégration de marché comporte une première pile de protocole et une seconde pile de protocole, ladite première pile de protocole étant adaptée pour faciliter la communication avec d'autres agents de ladite pluralité de types d'agents opérant dans ledit marché électronique basé sur les agents, et ladite seconde pile de protocole interagissant avec ledit second marché électronique basé sur les agents ou marché électronique basé sur le Web.

26. Procédé selon la revendication 25, **caractérisé en ce que** ladite première pile de protocole comporte trois couches, à savoir :
- une couche d'informations pour manipuler des informations de marché ;
- une couche d'interaction pour manipuler des messages d'agents et
- une couche de transfert b de message pour manipuler le transfert de message via TCP, SMTP, HTTP,

27. Procédé selon l'une quelconque des revendications 24 à 26, **caractérisé en ce qu'**un agent assistant personnel interagit avec ledit agent d'intégration de marché en passant un message audit agent d'intégration de marché.

28. Procédé selon la revendication 27, **caractérisé en ce que** ledit agent d'intégration de marché convertit ledit message en un message HTTP.

29. Procédé selon l'une quelconque des revendications 27 ou 28, **caractérisé en ce que** ledit agent d'intégration de marché reçoit des données dudit second marché électronique basé sur les agents ou marché électronique basé sur le Web et convertit lesdites données dans un format permettant la réception des données dudit marché basé sur le Web par des agents et permettant la réception desdites données dudit marché électronique basé sur les agents par les agents basés sur différentes plates-formes techniques.

30. Procédé selon la revendication 29, **caractérisé en ce que** lesdites données reçues du second marché électronique basé sur les agents ou marché électronique basé sur le Web sont une page HTML.

31. Procédé selon l'une quelconque de la revendication 29 ou de la revendication 30, **caractérisé en ce que** ledit agent d'intégration de marché passe les données reçues dudit second marché électronique basé sur les agents ou marché électronique basé sur le Web audit agent assistant personnel dans un format de communication d'agent permettant la réception desdites données par ledit agent assistant personnel.

32. Procédé selon l'une quelconque des revendications 24 à 31, **caractérisé en ce que** lesdites informations que ledit agent d'intégration de marché convertit comprennent : des spécifications d'intérêts, un contrat et des descriptions d'articles commerciaux.

33. Procédé selon l'une quelconque des revendications 24 à 32, **caractérisé en ce que** lesdites interactions que ledit agent d'intégration de marché convertit comprennent : la recherche d'intérêts concordants, la négociation de marchés et le règlement de marchés.

34. Procédé selon l'une quelconque des revendications 24 à 33, **caractérisé en ce que** ledit agent d'intégration de marché manipule des événements de message qui comprennent ; «Demander» ; « Dire » « Négocier » ; « Offrir » ; « Accepter » ; « Décliner » ; et « Attendre ».
